# EUROPEAN PATENT SPECIFICATION

(11) **EP 2 059 082 B1**
(45) Date of publication and mention of the grant of the patent: **27.10.2010**
(21) Application number: 07120404.4
(22) Date of filing: 09.11.2007
(51) Int. Cl.: H04W 48/02

(54) **Blocking devices from a carrier network**
Sperren von Geräten in einem Trägernetzwerk
Blocage de dispositifs depuis un réseau porteur

(43) Date of publication of application: 13.05.2009
(73) Proprietor: RESEARCH IN MOTION LIMITED, Waterloo, Ontario N2L 3W8 (CA)
(72) Inventor: Huynh, Tran Hoang, Waterloo Ontario N2L 3W8 (CA)
(74) Representative: MERH-IP Matias Erny Reichl Hoffmann

(56) References cited:
- EP-A- 1 796 421
- US-A1- 2004 198 319
- US-A1- 2005 149 443
- VALES-ALONSO J ET AL: "Selective interceptors for the UMTS terrestrial radio access network" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 September 2004 (2004-09-26), pages 5265-5270, XP010790410 ISBN: 0-7803-8521-7

## Description

The present invention relates generally to a system and method for blocking a device from a carrier network.

Suppliers of communication services may provide various types of services that may be offered to mobile handheld device subscribers on various carriers. Such services may include, for example, electronic mail (email), voice communications, instant text messaging, Internet browsing, music downloading, and various services that may become available with the introduction of a new communication device. With the addition of new types of services and features, it may be necessary to upgrade network software versions, which may make certain devices incompatible with certain carrier networks. A solution is required to effectively manage access to a carrier network for these devices.

### BACKGROUND

EP1796421 relates to a method for locking a terminal home, which may ensure that in a preferential activity of the network operator, a gift, discounted or rented terminal may be used when it is limited in a designated area or network, so that "sales across regions" in the prior art may be prevented. According to the embodiments of the invention, network operator information and home information related to a terminal are preset. After the terminal starts up, whether the terminal is within the preset network of the network operator is determined, and whether the current home is the preset home is determined. The terminal may only be used normally in the preset network of the network operator and in a specific area.

US2004198319 discloses a system for enforcing configuration requirements for hardware and software on mobile units operating on Wireless Local Area Networks (WLAN). The system allows the configuration policy to change dynamically with the access point or sub-network association. Whenever a mobile unit connects to a new sub-network or access point, the system invokes and then verifies the proper configuration profile for that sub-network or access point. Thus the system ensures the configuration of the mobile unit meets the requirements for the sub-network being used.

In one aspect, there is preferably provided a method of temporarily blocking a mobile handheld device from a carrier network for a network software upgrade, comprising:
defining one or more unauthorized combination filters comprising one or more device parameters, the one or more device parameters defining device parameter values common to a group of devices to be blocked for the network software upgrade; attaching the one or more unauthorized combination filters to a carrier registration subsystem identified by a carrier identifier; comparing the device parameter values in the one or more unauthorized combination filters to device parameter values stored in a mobile handheld device; if the device parameter values stored in the mobile handheld device match the device parameter values in the one or more unauthorized combination filters, then temporarily blocking the device from accessing the carrier network with the carrier registration subsystem having the one or more attached unauthorized combination filters; and permitting the mobile handheld device to access the carrier network with the carrier registration subsystem having the one or more attached unauthorized combination filters when the parameter values stored in the mobile handheld device are updated so as to no longer match the device parameter values in the one or more attached unauthorized combination filters.

In another aspect there is provided a system for carrying out the above method.

Other aspects will be appreciated from the dependent claims.

### BRIEF DESCRIPTION OF THE DRAWINGS

In the figures which illustrate exemplary embodiments:
FIG. 1 is an illustration of a mobile handheld device in accordance with an embodiment;
FIG. 2 is a schematic diagram of a communication subsystem component in the device of
FIG. 1;

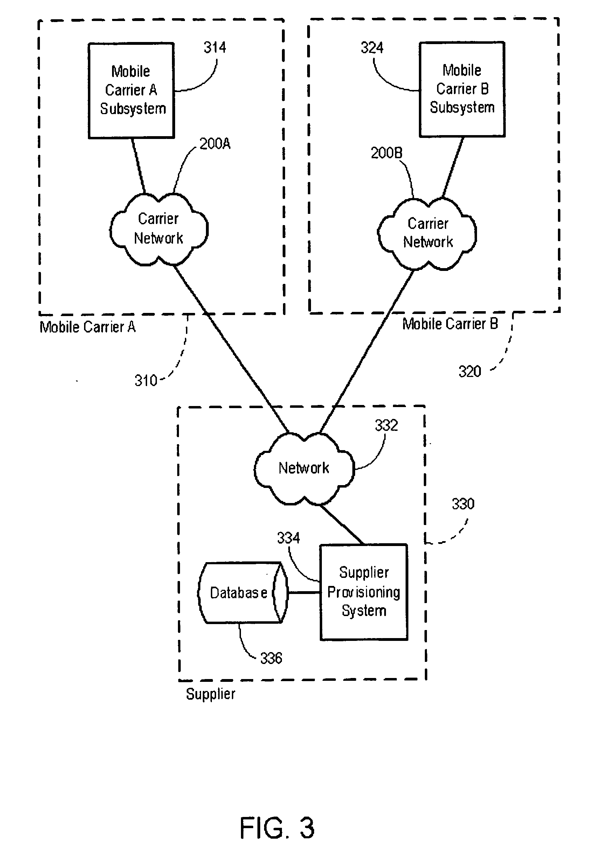

FIG. 3 is a schematic diagram of illustrative wireless networks;

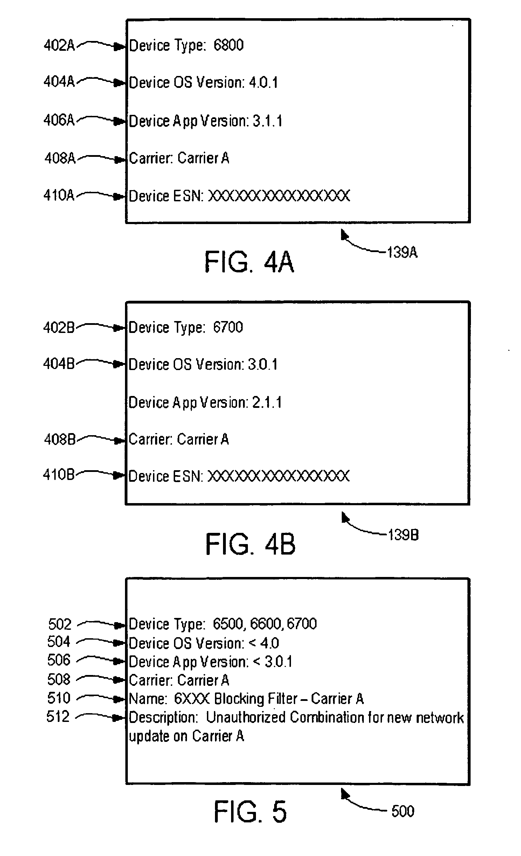

FIG. 4A and FIG. 4B show illustrative device parameter values stored in first and second devices;
FIG. 5 shows a schematic diagram of a user interface for setting device parameter values for an unauthorized combination filter;

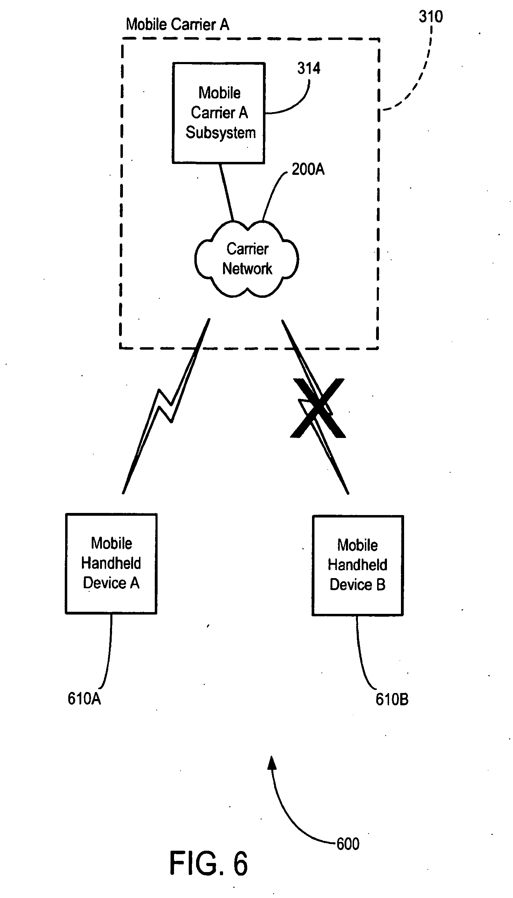

FIG. 6 shows an illustrative example of a device being blocked from a carrier network; a
   and

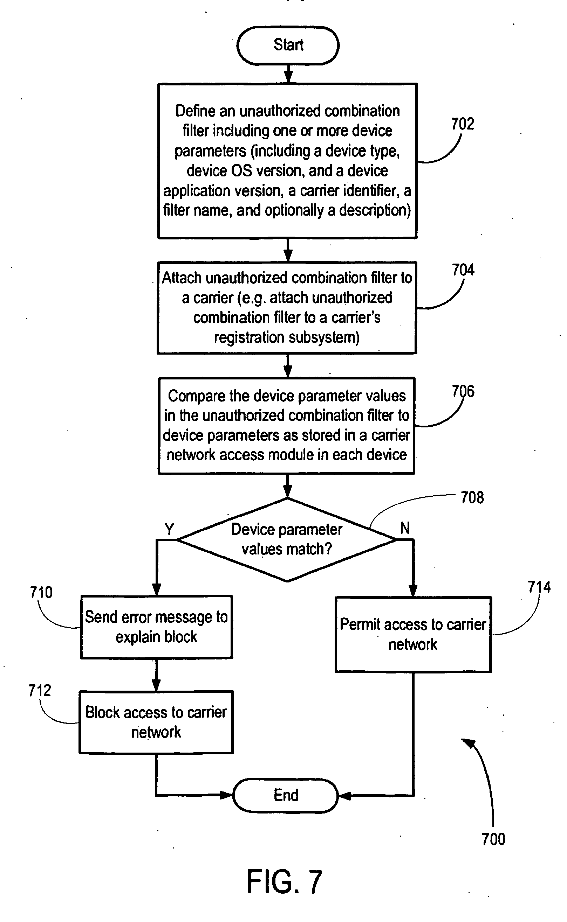

FIG. 7 is an illustrative flowchart of a method in accordance with an embodiment.

### DESCRIPTION OF PREFERRED EMBODIMENTS

As noted above, the present invention relates to a system and method for blocking a device from a carrier network.

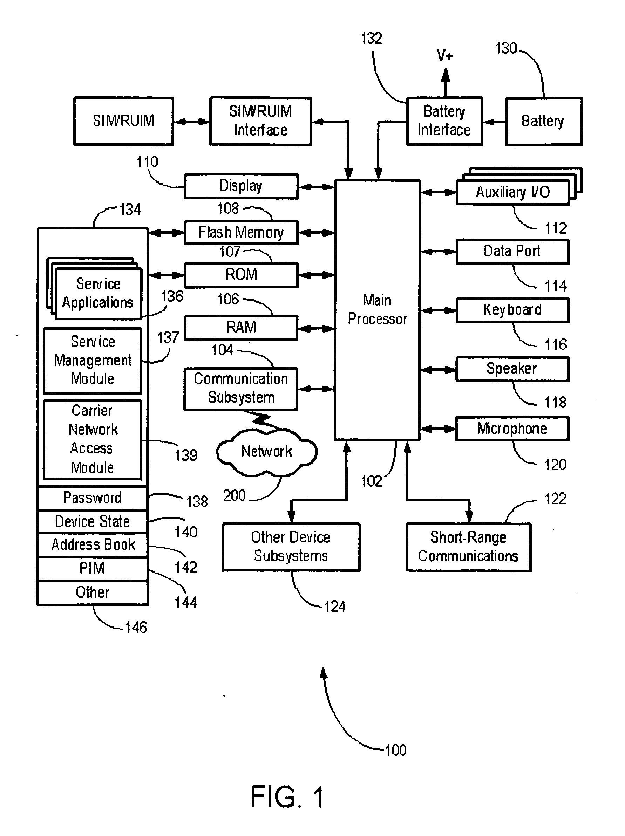

Shown in FIG. 1 is a schematic block diagram of an illustrative mobile handheld device 100. The handheld device 100 may comprise a number of components, including a main processor 102 which controls the overall operation of device 100. Various communication functions, including data and voice communications, Internet browsing, instant text messaging, etc. may be performed through a communication subsystem 104 via wireless network 200.

The main processor 102 may also interact with additional subsystems such as a random access memory (RAM) 106, a flash memory 108, a display 110, an auxiliary input/output (I/O) subsystem 112, a data port 114, a keyboard 116, a speaker 118, a microphone 120, short-range communications 122 and other device subsystems 124. The device 100 may be a battery-powered device and may include a battery interface 132 for receiving one or more rechargeable batteries 130 and for powering the various subsystems described above.

Operating system software used by the main processor 102 is typically stored in a persistent store such as flash memory 108. Those skilled in the art will appreciate that the operating system, specific device applications, or parts thereof, may be temporarily loaded into a volatile store such as the RAM 106.

Handheld device 100 may also include a read-only memory (ROM) 107 that may store a non-alterable electronic serial number or ESN which may be burned into ROM 107 at the time of manufacture of device 100. In addition, handheld device 100 may have a unique product identification number (PIN) stored in the ROM 107, or in another memory store in device 100.

The main processor 102, in addition to its operating system functions, enables execution of software applications 134 on the device 100. The software applications 134 may control various device features and services, and may be installed on the device 100 during its manufacture, or may be subsequently loaded onto the device 100 as a software update through one of the wireless network 200, the auxiliary I/O subsystem 112, the data port 114, the short-range communications subsystem 122, or another subsystem 124.

The software applications 134 may include, for example, various communication service modules 136 (e.g. email, instant text messaging, Internet browsing, music downloading, etc.), and a password approval module 138. The software applications 134 may also include a device service management module 137 for managing the service applications provisioned for device 100 on a carrier network. The handheld device 100 may also include a carrier network access module 139 that may be suitably adapted to manage access to a carrier network for the handheld device 100. Carrier network access module 139 will be described in more detail below. The handheld device 100 may further include a device state module 140, an address book 142, a personal information manager (PIM) 144, and various other modules 146.

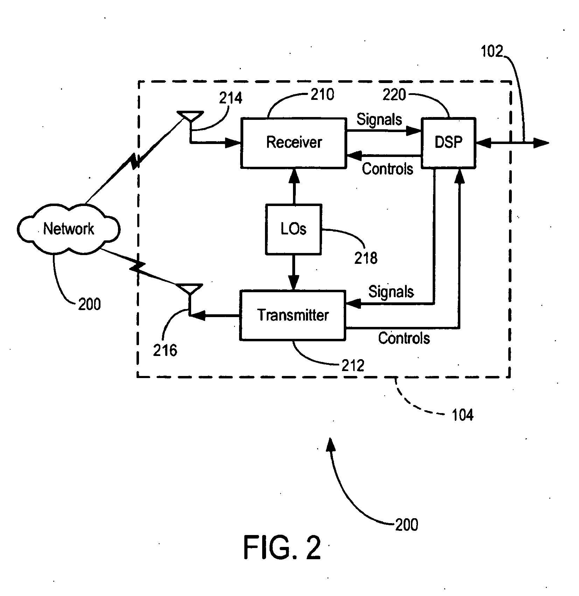

Referring now to FIG. 2, a block diagram of the communication subsystem component 104 of FIG. 1 is shown. The communication subsystem 104 may comprise a receiver 210 and a transmitter 212, as well as associated components such as one or more embedded or internal antenna elements 214, 216, Local Oscillators (LOs) 218, and a processing module such as a Digital Signal Processor (DSP) 220.

Signals received by the antenna 214 through the wireless network 200 are input to the receiver 210, which can perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 220. In a similar manner, signals to be transmitted are processed, including modulation and encoding, by the DSP 220. These DSP-processed signals are input to the transmitter 212 for digital-to-analog (D/A) conversion, frequency up conversion, filtering, amplification and transmission over the wireless network 200 via the antenna 216.

Now referring to FIG. 3, shown is an illustrative schematic block diagram of wireless networks 200A, 200B of mobile carrier A 310 and mobile carrier B 320, respectively. With the various components and subsystems described above, device 100 may be configured to access various services available through wireless networks 200A and 200B. As shown, each of the wireless networks 200A, 200B may have subsystems 314, 324 for registering and provisioning various wireless services for devices 100 on their respective wireless networks 310, 320. The supplier 330 may offer various communication services via network connections to the supplier 330's own network 332. The communication services may include, for example, wireless email, voice communication, instant text messaging, Internet browsing, music downloading, and various other services to subscribers on wireless networks 200A, 200B.

The supplier 330's network 332 may connect to a provisioning system 334 maintained by the supplier 330 and which may be appropriately configured to interact with subsystems 314, 324 provided on each of the wireless networks 200A, 200B. If connected through the Internet, for example, the connections between provisioning system 334 and subsystems 314, 324 may be by way of XML, or a web services interface. With a suitable network connection, subsystems 314 and 324 may be configured to interact with the supplier 330's provisioning system 334 to request activation, deactivation, suspension or modification of a subscriber's services on their respective wireless networks 200A, 200B.

Provisioning system 334 may maintain a database 336 of services that have been provisioned for each of the devices 100 on the wireless networks 200A, 200B of mobile carrier A 310, and mobile carrier B 320. In the database 336 of provisioning system 334, each of the devices 100 may be uniquely identified, for example, by the unique ESN burned into the ROM 107 of each device 100. Alternatively, each device 100 may be uniquely identified by the unique PIN identifier stored in ROM 107, or in another memory store in device 100. Records in database 336 may contain the unique ESN or PIN retrieved from ROM 107 or another memory store on each device 100. Each device 100 may thus be uniquely recognized by the supplier's provisioning system 334. Records in database 336 may also store information for the owning mobile carrier (e.g. mobile carrier A 310, or mobile carrier B 320), and this information may be linked to the unique ESN or PIN of device 100.

In an embodiment, each device 100 may include a carrier network access module 139 (FIG. 1) which is adapted to store various device properties or parameters, such as device type, device operating system ("OS") version, and a device application version. Furthermore, the carrier network access module 139 may store a value indicating the carrier to which the device 100 is linked or assigned. As will be explained in more detail further below, these various device parameters or properties may be used individually or in combination to block a device 100 or a plurality of devices 100 from accessing a particular carrier network.

Now referring to FIG. 4A, in an illustrative example, a first mobile handheld device 100A may have a carrier network access module 139A storing values for each device parameter, such as device type value 402A of "6800", a device OS version value 404A of "4.0.1", a device application value 406A of "3.1.1", and a carrier identifier 408A of "Carrier A". As shown, carrier network access module 139A may also have access to the device ESN value 410A retrieved from ROM 107 of device 100A.

Now referring to FIG. 4B, in another illustrative example, a second mobile handheld device 100B may have a carrier network access module 139B storing values for each device parameter, such as a device type value 402B of "6700", a device OS version value 404B of "3.0.1", a device application version of "2.1.1", and a carrier identifier 408B of "Carrier A". As shown, carrier network access module 139B may also have access to the device ESN value 410B retrieved from ROM 107 of device 100B.

Now referring to FIG. 5, in an illustrative example, shown is a user interface that may be accessed by an administrator for defining an unauthorized combination filter 500 of device parameters that may be used to block a device or a plurality of devices from accessing carrier network 200A. The term "unauthorized combination" is used in the present disclosure to define device parameters for a group of devices to be blocked from a particular carrier network. More particularly, the device parameters may be a combination of a number of device parameters, including one or more of such device parameters as described above.

As illustrated in FIG. 5, each unauthorized combination filter 500 may include an unauthorized device type field 502, an unauthorized device OS version field 504, and an unauthorized device application version field 506. The regular expression fields in the unauthorized combination 500 are used to determine the group or class of devices to be blocked from a carrier as defined in carrier identifier 508.

Furthermore, each unauthorized combination filter 500 may include a name field 510 which contains a unique name for the unauthorized combination filter 500 (e.g. such as "6XXX Blocking Filter - Carrier A"), and which may be used to uniquely identify the unauthorized combination filter 500.

Optionally, a description field 512 may also be included to provide a more detailed description for the unauthorized combination filter 500, such as "Unauthorized combination for new network update on carrier A" in the current illustrative example. The unauthorized combination filter 500 thus defines a group or class of devices to be blocked, and may be attached to a carrier via carrier identifier 508. By mapping the unauthorized combination filter 500 to a carrier's unique identifier 508, the blocking mechanism may take affect.

While the above embodiments describe an example where the unauthorized combination filter 500 is attached to one carrier (e.g. carrier A), it will be appreciated that the unauthorized combination filter 500 may be attached to more than one carrier. As well, a carrier may have more than one unauthorized combination filter blocking more than one group or class of devices based on different filtering criteria.

Now referring to FIG. 6, shown is a block diagram 600 of an illustrative example of how a defined unauthorized combination filter 500 may be attached to a carrier to block a group or class of devices from accessing a carrier network. For example, the unauthorized combination filter 500 may be defined and attached to mobile carrier A subsystem 314 such that the device parameters for any device attempting to register on mobile carrier A's network is tested against the device parameter values in the unauthorized combination filter 500.

As shown, a first mobile handheld device 610A and a second mobile handheld device 610B may be provisioned to access the carrier network of mobile carrier A shown at 310. As the first and second mobile handheld devices 610A and 610B each attempt to register through mobile carrier A's carrier network, the device parameter values in the carrier network access module 139 of each device is compared against the device parameter values in the unauthorized combination filter 500 that is attached to a mobile carrier A's subsystem 314.

For example, each of the device type values 402A and 402B may be compared against a number of unauthorized device types as defined in the unauthorized device type field 502, and each of the device OS version values 404A and 404B may be compared against a minimum OS version as defined in the unauthorized device OS version field 504.

In an embodiment, at mobile carrier A's registration and provisioning subsystem 314, if the device's device type, device OS version and device application version match the corresponding unauthorized device type, unauthorized device OS version, and unauthorized device application version fields as defined in the unauthorized combination filter 500, the device will be blocked. Thus, as shown, the first mobile handheld device 610A is successfully registered and is able to access the carrier network 200A for mobile carrier A as there is no complete match. On the other hand, when the second mobile handheld device 610B attempts to register on the carrier network 200A, it is unable to access the carrier network 200A as it is blocked by the defined unauthorized combination filter 500 attached to mobile carrier A's subsystem 314 (i.e. there is a match of the device parameters).

In another embodiment, instead of populating all of the fields of unauthorized combination filter 500, only some of the fields may be populated so that the unauthorized combination filter 500 is less specific (and thus is able to block a larger group or class of devices). As will be appreciated, by defining one or more of the unauthorized device parameters, and by attaching the defined unauthorized combination filter 500 to a carrier subsystem (e.g. mobile carrier A's subsystem 314), a group or class of devices may be blocked from accessing the carrier network, thereby allowing effective network management.

In an embodiment, when a device is unable to access the carrier network 200A, the device ESN (e.g. as may be provided in the carrier network access module 139) may be recorded for device management purposes. Thus, for example, if mobile handheld device 610B is temporarily being blocked from mobile carrier A's carrier network 200A due to an incompatibility with upgraded software on the network, the device user may be notified of the problem and instructed to seek a remedy, such as upgrading the device OS version and/or the device application version, by attaching the device to a computer attached to the Internet. Thus, the device OS version and the device application version may be updated as needed for support by a carrier network. Alternatively, the software on the network may be further updated to improve compatibility with more devices and versions.

Once the reason for blocking a group or class of devices has disappeared, the unauthorized combination filter may be detached from the carrier's registration and provisioning subsystem, such that subsequent attempts to register on the carrier network will be successful.

Now referring to FIG. 7, shown is an illustrative method 700 for blocking a device from a carrier network corresponding to the system as described above. Method 700 starts at block 702, where method 700 defines an unauthorized combination filter. As described earlier, the unauthorized combination filter may include values for one or more device parameters as defined by an administrator, including a device type, device OS version, a device application version, a carrier identifier, and a unique name for the unauthorized combination filter. Optionally, the unauthorized combination filter may further include a description field for entering a fuller description of the unauthorized combination filter.

Method 700 then proceeds to block 704, where method 700 attaches the unauthorized combination filter to a carrier. By attaching the unauthorized combination filter to a carrier, the blocking function of the unauthorized combination is activated.

Next, method 700 proceeds to block 706, where method 700 compares the device parameter values in the unauthorized combination filter to the device parameter values as stored in a carrier network access module in each device.

Method 700 then proceeds to decision block 708, where method 700 determines if the device parameter values match. If yes, method 700 proceeds to block 710 where method 700 optionally sends an error message to the device to explain why the device is being blocked. Method 700 may then proceed to block 712 to block access to the carrier network and prevent the device from registering. Method 700 then ends.

If at decision block 708 the answer is no, then method 700 proceeds to block 714 where method 700 permits access to the carrier network and allows the device to function normally. Method 700 then ends.

While illustrative embodiments have been described above, it will be appreciated that various changes and modifications may be made. More generally, the scope of the invention is defined by the following claims.

## Claims

1. A method of temporarily blocking a mobile handheld device (100) from a carrier network (200A, 200B) for a network software upgrade, comprising:
defining (702) one or more unauthorized combination filters comprising one or more device parameters, the one or more device parameters defining device parameter values common to a group of devices (100) to be blocked for the network software upgrade;
attaching (704) the one or more unauthorized combination filters to a carrier registration subsystem (314, 324) identified by a carrier identifier (408A, 408B);
comparing (706) the device parameter values in the one or more unauthorized combination filters to device parameter values stored in a mobile handheld device (100);
if the device parameter values stored in the mobile handheld device (100) match the device parameter values in the one or more unauthorized combination filters, then temporarily blocking (712) the device (100) from accessing the carrier network (200A, 200B) with the carrier registration subsystem (314, 324) having the one or more attached unauthorized combination filters; and
permitting the mobile handheld device (100) to access the carrier network (200A, 200B) with the carrier registration subsystem (314, 324) having the one or more attached unauthorized combination filters when the parameter values stored in the mobile handheld device (100) are updated so as to no longer match the device parameter values in the one or more attached unauthorized combination filters.

2. The method of claim 1, wherein the device parameter values stored in the mobile handheld device (100) comprise one or more of a device type value, a device operating system version value, and a device application version value.

3. The method of any one of the preceding claims, further comprising sending (710) an error message to the mobile handheld device (100) upon blocking (712) to explain the reason for the block (712).

4. The method of any one of the preceding claims, further comprising retrieving and storing the electronic serial number 'ESN' or product identification number 'PIN' for each blocked mobile handheld device (100).

5. A system for temporarily blocking (712) a group of mobile handheld devices (100) from a carrier network (200A, 200B) for a network software upgrade, comprising:
processing means adapted to define (702) one or more unauthorized combination filters comprising one or more device parameters, the one or more device parameters defining device parameter values common to a group of devices (100) to be blocked;
processing means adapted to attach (704) the one or more unauthorized combination filters to a carrier registration subsystem (314, 324) identified by a carrier identifier (408A, 408B); and
processing means adapted to:
compare (706) the device parameter values in the one or more unauthorized combination filters to device parameter values stored in a mobile handheld device (100);
temporarily block (712) the mobile handheld device (100) from accessing the carrier network (200A, 200B) with the carrier registration subsystem (314, 324) having the one or more attached unauthorized combination filters if the device parameter values stored in the mobile handheld device (100) match; and
permit the mobile handheld device (100) to access the carrier network (200A, 200B) with the carrier registration subsystem (314, 324) having the one or more attached unauthorized combination filters when the parameter values stored in the mobile handheld device (100) are updated so as to no longer match the device parameter values in the one or more attached unauthorized combination filters.

6. The system of claim 5, wherein the device parameter values stored in the mobile handheld device (100) comprise one or more of a device type value, a device operating system version value, and a device application version value.

7. The system of any one of claims 5 or 6, further comprising processing means adapted to send (710) an error message to the mobile handheld device (100) upon blocking (712) to explain the reason for the block.

8. The system of any one of claims 5 to 7, further comprising processing means adapted to retrieve and store the electronic serial number 'ESN' or product identification number 'PIN' for each blocked mobile handheld device (100).

9. A data processor readable medium storing data processor code that when loaded onto a carrier registration subsystem adapts the subsystem to block a mobile handheld device (100) from a carrier network (200A, 200B) by causing said subsystem to perform the steps of the method of any one of claims 1 to 4.

## Patentansprüche

1. Verfahren zum temporären Blockieren einer mobilen handgehaltenen Vorrichtung (100) von einem Carrier-Netzwerk (200A, 200B) für eine Netzwerk-Software-Aktualisierung, das aufweist:
Definieren (702) eines oder mehrerer "nicht autorisierte Kombination"-Filter, die einen oder mehrere Vorrichtungsparameter aufweisen, wobei der eine oder mehrere Vorrichtungsparameter Vorrichtungsparameterwerte definieren, die für eine Gruppe von Vorrichtungen (100) gemeinsam sind, die für die Netzwerk-Software-Aktualisierung blockiert werden sollen;
Anhängen (704) des einen oder mehrerer "nicht autorisierte Kombination"-Filter an ein Carrier-Registrierungsteilsystem (314, 324), das durch einen Carrier-Identifizierer (408A, 408B) identifiziert wird;
Vergleichen (706) der Vorrichtungsparameterwerte in dem einen oder mehreren "nicht autorisierte Kombination"-Filtern mit Vorrichtungsparameterwerten, die in einer mobilen handgehaltenen Vorrichtung (100) gespeichert sind;
wenn die Vorrichtungsparameterwerte, die in der mobilen handgehaltenen Vorrichtung (100) gespeichert sind, mit den Vorrichtungsparameterwerten in dem einen oder mehreren "nicht autorisierte Kombination"-Filtern übereinstimmen, dann temporäres Blockieren (712) der Vorrichtung (100) von einem Zugang zu dem Carrier-Netzwerk (200A, 200B), wobei das Carrier-Registrierungsteilsystem (314, 324) den einen oder mehrere angehängte "nicht autorisierte Kombination"-Filter hat; und
Ermöglichen der mobilen handgehaltenen Vorrichtung (100), auf das Carrier-Netzwerk (200A, 200B) zuzugreifen, wobei das Carrier-Registrierungsteilsystem (314, 324) den einen oder mehrere angehängte "nicht autorisierte Kombination"-Filter hat, wenn die Parameterwerte, die in der mobilen handgehaltenen Vorrichtung (100) gespeichert sind, aktualisiert sind, um so nicht länger mit den Vorrichtungsparameterwerten in dem einen oder mehreren angehängten "nicht autorisierte Kombination"-Filtern übereinzustimmen.

2. Verfahren gemäß Anspruch 1, wobei die Vorrichtungsparameterwerte, die in der mobilen handgehaltenen Vorrichtung (100) gespeichert sind, einen oder mehrere eines Vorrichtungstypwerts, eines Vorrichtungsbetriebssystemversionswerts und eines Vorrichtungsanwendungsversionswerts aufweisen.

3. Verfahren gemäß einem der vorhergehenden Ansprüche, das weiter aufweist, bei einem Blockieren (712), Senden (710) einer Fehlernachricht an die mobile handgehaltene Vorrichtung (100), um den Grund des Blockierens (712) zu erläutern.

4. Verfahren gemäß einem der vorhergehenden Ansprüche, das weiter aufweist Abrufen und Speichern der elektronischen Seriennummer "ESN (electronic serial number)" oder der Produktidentifikationsnummer "PIN (product identification number)" für jede blockierte mobile handgehaltene Vorrichtung (100).

5. System zum temporären Blockieren (712) einer Gruppe von mobilen handgehaltenen Vorrichtungen (100) von einem Carrier-Netzwerk (200A, 200B) für eine Netzwerk-Software-Aktualisierung, das aufweist:
Verarbeitungsmittel, die ausgebildet sind zum Definieren (702) eines oder mehrerer "nicht autorisierte Kombination"-Filter, die einen oder mehrere Vorrichtungsparameter aufweisen, wobei der eine oder mehrere Vorrichtungsparameter Vorrichtungsparameterwerte definieren, die für eine Gruppe von Vorrichtungen (100) gemeinsam sind, die blockiert werden sollen;
Verarbeitungsmittel, die ausgebildet sind zum Anhängen (704) des einen oder mehrerer "nicht autorisierte Kombination"-Filter an ein Carrier-Registrierungsteilsystem (314, 324), das durch einen Carrier-Identifizierer (408A, 408B) identifiziert wird; und
Verarbeitungsmittel, die ausgebildet sind zum:
Vergleichen (706) der Vorrichtungsparameterwerte in dem einen oder mehreren "nicht autorisierte Kombination"-Filtern mit Vorrichtungsparameterwerten, die in einer mobilen handgehaltenen Vorrichtung (100) gespeichert sind;
temporäres Blockieren (712) der mobilen handgehaltenen Vorrichtung (100) von einem Zugang zu dem Carrier-Netzwerk (200A, 200B), wobei das Carrier-Registrierungsteilsystem (314, 324) den einen oder mehrere angehängte "nicht autorisierte Kombination"-Filter hat, wenn die Vorrichtungs-parameterwerte, die in der mobilen handgehaltenen Vorrichtung (100) gespeichert sind, übereinstimmen; und
Ermöglichen der mobilen handgehaltenen Vorrichtung (100), auf das Carrier-Netzwerk (200A, 200B) zuzugreifen, wobei das Carrier-Registrierungsteilsystem (314, 324) den einen oder mehrere angehängte "nicht autorisierte Kombination"-Filter hat, wenn die Parameterwerte, die in der mobilen handgehaltenen Vorrichtung (100) gespeichert sind, aktualisiert sind, um so nicht länger mit den Vorrichtungsparameterwerten in dem einen oder mehreren angehängten "nicht autorisierte Kombination"-Filtern übereinzustimmen.

6. System gemäß Anspruch 5, wobei die Vorrichtungsparameterwerte, die in der mobilen handgehaltenen Vorrichtung (100) gespeichert sind, einen oder mehrere eines Vorrichtungstypwerts, eines Vorrichtungsbetriebssystemversionswerts und eines Vorrichtungsanwendungsversionswerts aufweisen.

7. System gemäß einem der Ansprüche 5 oder 6, das weiter Verarbeitungsmittel aufweist, die ausgebildet sind, bei einem Blockieren (712), zum Senden (710) einer Fehlernachricht an die mobile handgehaltene Vorrichtung (100), um den Grund des Blockierens zu erläutern.

8. System gemäß einem der Ansprüche 5 bis 7, das weiter Verarbeitungsmittel aufweist, die ausgebildet sind zum Abrufen und Speichern der elektronischen Seriennummer "ESN (electronic serial number)" oder der Produktidentifikationsnummer "PIN (product identification number)" für jede blockierte mobile handgehaltene Vorrichtung (100).

9. Datenprozessor-lesbares Medium, das Datenprozessorcode speichert, der bei einem Laden auf ein Carrier-Registrierungsteilsystem das Teilsystem anpasst, eine mobile handgehaltene Vorrichtung (100) von einem Carrier-Netzwerk (200A, 200B) zu blockieren, durch Veranlassen, dass das Teilsystem die Schritte des Verfahrens gemäß einem der Ansprüche 1 bis 4 durchführt.

## Revendications

1. Procédé destiné à bloquer temporairement l'accès d'un dispositif portatif mobile (100) au réseau d'un opérateur de télécommunications (200A, 200B) pour une mise à jour d'un logiciel de réseau, comprenant le fait :
de définir (702) un ou plusieurs filtres de combinaison non autorisée comprenant un ou plusieurs paramètres de dispositif, l'un ou les plusieurs paramètres de dispositif définissant des valeurs de paramètres de dispositif communes à un groupe de dispositifs (100) à bloquer pour la mise à jour du logiciel de réseau ;
de rattacher (704) le ou les plusieurs filtres de combinaison non autorisée à un sous-système d'enregistrement de l'opérateur de télécommunications (314, 324) identifié par un identifiant de l'opérateur de télécommunications (408A, 408B) ;
de comparer (706) les valeurs de paramètres de dispositif dans le ou les plusieurs filtres de combinaison non autorisée avec les valeurs de paramètres de dispositif stockées dans un dispositif portatif mobile (100) ;
de bloquer temporairement (712), si les valeurs de paramètres de dispositif stockées dans le dispositif portatif mobile (100) correspondent aux valeurs de paramètres de dispositif dans le ou les plusieurs filtres de combinaison non autorisée, l'accès du dispositif (100) au réseau de l'opérateur de télécommunications (200A, 200B) avec le sous-système d'enregistrement de l'opérateur de télécommunications (314, 324) ayant le ou les plusieurs filtres de combinaison non autorisée rattachés ; et
de permettre au dispositif portatif mobile (100) d'avoir accès au réseau de l'opérateur de télécommunications (200A, 200B) avec le sous-système d'enregistrement de l'opérateur de télécommunications (314, 324) ayant le ou les plusieurs filtres de combinaison non autorisée rattachés lorsque les valeurs de paramètres stockées dans le dispositif portatif mobile (100) sont mises à jour de sorte à ce qu'elles ne correspondent plus aux valeurs de paramètres de dispositif dans le ou les plusieurs filtres de combinaison non autorisée rattachés.

2. Procédé de la revendication 1, dans lequel les valeurs de paramètres de dispositif stockées dans le dispositif portatif mobile (100) comprennent l'une d'une ou plusieurs parmi une valeur concernant le type du dispositif, une valeur concernant la version du système d'exploitation du dispositif et une valeur concernant les paramètres du dispositif.

3. Procédé de l'une quelconque des revendications précédentes, comprenant en plus l'envoi (710) d'un message d'erreur au dispositif portatif mobile (100) lors du blocage (712) pour expliquer la raison du blocage (712).

4. Procédé de l'une quelconque des revendications précédentes, comprenant en plus le retrait et le stockage du numéro de série électronique 'ESN' ou du numéro d'identification du produit 'PIN' pour chaque dispositif portatif mobile bloqué (100).

5. Système destiné à bloquer temporairement (712) l'accès d'un groupe de dispositifs portatifs mobiles (100) au réseau d'un opérateur de télécommunications (200A, 200B) pour une mise à jour d'un logiciel de réseau, comprenant :
un moyen de traitement adapté pour définir (702) un ou plusieurs filtres de combinaison non autorisée comprenant un ou plusieurs paramètres de dispositif, le ou les plusieurs paramètres de dispositif définissant des valeurs de paramètres de dispositif communes à un groupe de dispositifs (100) à bloquer ;
un moyen de traitement adapté pour rattacher (704) le ou les plusieurs filtres de combinaison non autorisée à un sous-système d'enregistrement de l'opérateur de télécommunications (314, 324) identifié par un identifiant de l'opérateur de télécommunications (408A, 408B) ; et
un moyen de traitement adapté :
pour comparer (706) les valeurs de paramètres de dispositif dans le ou les plusieurs filtres de combinaison non autorisée aux valeurs de paramètres de dispositif stockées dans un dispositif portatif mobile (100) ;
pour bloquer temporairement (712) l'accès du dispositif portatif mobile (100) au réseau de l'opérateur de télécommunications (200A, 200B) avec le sous-système d'enregistrement de l'opérateur de télécommunications (314, 324) ayant le ou les plusieurs filtres de combinaison non autorisée si les valeurs de paramètres de dispositif dans le dispositif portatif mobile (100) concordent ; et
pour permettre au dispositif portatif mobile (100) d'avoir accès au réseau de l'opérateur de télécommunications (200A, 200B) avec le sous-système d'enregistrement de l'opérateur de télécommunications (314, 324) ayant le ou les plusieurs filtres de combinaison non autorisée rattachés lorsque les valeurs de paramètres stockées dans le dispositif portatif mobile (100) sont mises à jour de sorte à ce qu'elles ne correspondent plus aux valeurs de paramètres de dispositif dans le ou les plusieurs filtres de combinaison non autorisée rattachés.

6. Système de la revendication 5, dans lequel les valeurs de paramètres de dispositif stockées dans le dispositif portatif mobile (100) comprennent l'une ou une pluralité parmi une valeur concernant le type du dispositif, une valeur concernant la version du système d'exploitation du dispositif et une valeur concernant les paramètres du dispositif.

7. Système de l'une quelconque des revendications 5 ou 6, comprenant en plus un moyen de traitement adapté pour envoyer (710) un message d'erreur au dispositif portatif mobile (100) lors du blocage (712) pour expliquer la raison du blocage.

8. Système de l'une quelconque des revendications 5 à 7, comprenant en plus un moyen de traitement adapté pour récupérer et stocker le numéro de série électronique 'ESN' ou le numéro d'identification du produit 'PIN' pour chaque dispositif portatif mobile bloqué (100).

9. Support lisible par un processeur de données stockant un code traitement de données qui, lorsqu'il est chargé sur un sous-système d'enregistrement d'un opérateur de télécommunications, adapte le sous-système pour bloquer un dispositif portatif mobile (100) d'un réseau de l'opérateur de télécommunications (200A, 200B) en amenant ledit sous-système à exécuter les étapes du procédé de l'une des revendications 1 à 4.
